# EUROPÄISCHE PATENTANMELDUNG

(11) **EP 1 661 468 A1**
(43) Veröffentlichungstag der Anmeldung: **31.05.2006**
(21) Anmeldenummer: 05025958.9
(22) Anmeldetag: 29.11.2005
(51) Int. Cl.: A23L 1/105, A23L 1/185

(54) **Verfahren zur Herstellung eines verzehrfertigen getreidebasierten Lebensmittelerzeugnisses sowie verzehrfertiges getreidebasiertes Lebensmittelerzeugnis, insbesondere Aufstrich**

(30) Priorität: 30.11.2004 DE 102004059324
(71) Anmelder: Weiss, Hans Otto, 86470 Thannhausen (DE)
(72) Erfinder: Weiss, Hans Otto, 86470 Thannhausen (DE)
(74) Vertreter: Kaufmann, Ursula Josefine

(57) **Zusammenfassung**

Die Erfindung betrifft ein Verfahren zur Herstellung eines verzehrfertigen getreidebasierten Lebensmittelerzeugnisses, insbesondere eines Aufstrichs, bei dem ein wässriger Extrakt aus einem Reaktionsprodukt aus ungekeimtem Getreide und einem Stärke in Zucker konvertierenden Zusatz in eine bei Raumtemperatur gelartige bis pastöse Textur überführt wird. Ebenso betrifft die Erfindung ein verzehrfertiges getreidebasiertes Lebensmittelerzeugnis.

## Beschreibung

### Stand der Technik

Die Erfindung betrifft ein Verfahren zur Herstellung eines verzehrfertigen getreidebasierten Lebensmittelerzeugnisses sowie ein verzehrfertiges getreidebasiertes Lebensmittelerzeugnis, insbesondere einen Aufstrich, nach den Oberbegriffen der unabhängigen Ansprüche.

Streichfähige verzehrfertige Lebensmittelzubereitungen, beispielsweise in Form von Brotaufstrichen, sind zumeist aus Grundkomponenten mit sehr unterschiedlich bewertetem physiologischen Nährwert zusammengesetzt. Konfitüren, Gelees, Marmeladen enthalten neben dem Fruchtgehalt einen hohen Anteil an zugesetzten Zuckerstoffen sowie Genusssäuren und Geliermittel. Nusscremes, Erdnussbutter und ähnliche Aufstriche haben neben emulgierenden Zutaten einen überwiegend hohen Fettanteil. Honig, Melassesirup und ähnliche Aufstriche bestehen überwiegend aus Zucker. Frischkäsezubereitungen und Schmelzkäsezubereitungen sowie Wurstwaren sind Gemenge aus überwiegend Fett und Protein, die mit Hilfe von Zusatzstoffen wie Bindemittel, Emulgatoren, Schmelzsalze in eine streichfähige Konsistenz gebracht werden.

Aus der Offenlegungsschrift DE 36 44 611 A1 ist eine getreidebasierte Lebensmittelzubereitung mit trinkbarer oder streichfähiger Konsistenz bekannt, bei der Getreidekömer in feuchter Atmosphäre zum Keimen gebracht und mit den noch weißen Keimlingen in angewärmtem Wasser zerdrückt und eingelöst werden, worauf der entstandene Brei fein gefiltert und die gefilterte Substanz bis zur gewünschten Konsistenz entwässert und entzuckert wird. Es handelt sich demnach um einen Malzextrakt bzw. um ein Lebensmittel aus Malzextrakt, dem gegebenenfalls, beispielsweise um ein gewünschtes Geschmacksprofil zu erhalten, Zucker entzogen oder die Umwandlung von Stärke in Zucker sogar unterbunden wird. Um den Geschmack und die Farbe des Produkts zu beeinflussen, wird vorgeschlagen, ein Malz aus einer Mischung von Getreidesorten herzustellen. Hierbei muss jedoch sichergestellt sein, dass der Keimungsprozess beim Mälzen der einzelnen Getreidesorten im Gemisch gleichzeitig beginnt und in gleicher Intensität abläuft. Um zeitliche Unterschiede zu berücksichtigen, können die verschiedenen Getreidesorten einzeln gemälzt und dann gemischt werden. Allerdings setzt dieses Verfahren grundsätzlich voraus, dass intakte Getreidekömer eingesetzt werden, da ein Keimen des Getreidekorns bei beschädigtem oder gar gemahlenem Korn nicht möglich ist.

Aufgabe der Erfindung ist es, ein verzehrfertiges getreidebasiertes Lebensmittelerzeugnis sowie ein Verfahren zur Herstellung eines getreidebasierten verzehrfertigen Lebensmittelerzeugnisses anzugeben, wobei unabhängig vom Ausgangszustand des Getreidekoms ein naturbelassenes, hochwertiges Lebensmittelerzeugnis geschaffen werden kann.

Die Aufgabe wird durch die Merkmale der unabhängigen Ansprüche gelöst.

Bei dem erfindungsgemäßen Verfahren zur Herstellung eines verzehrfertigen getreidebasierten Lebensmittelerzeugnisses wird ein wässriger Extrakt aus einem Reaktionsprodukt aus ungekeimtem Getreide und einem Stärke in Zucker konvertierenden Zusatz in eine bei Raumtemperatur gelartige bis pastöse Textur überführt. Anders als im Stand der Technik handelt es sich also nicht um einen Malzextrakt, sondern um einen Extrakt mit den löslichen Nährstoffen des verwendeten Getreides, dessen unlösliche Stärke in lösliche Zuckerstoffe konvertiert wurde. Weiterhin ist, im Gegensatz zum Stand der Technik, eine Entzuckerung oder eine Neutralisierung der Zuckerbestandteile im Reaktionsprodukt bzw. im Extrakt unerwünscht. Bei dem Extrakt handelt es sich jedoch auch nicht um einen Zuckersirup, sondern um ein Lebensmittelerzeugnis, bzw. dessen Vorstufe, das einen hohen Nährwertgehalt aufweist und nicht ein physiologisch "leeres" Stärkeverzuckerungsprodukt. Das verzehrfertige Lebensmittelerzeugnis weist bei Raumtemperatur eine gelartige bis pastöse Textur und einen überwiegenden Gewichtsanteil an wasserlöslichen Bestandteilen von ungekeimtem Getreide auf sowie einen Gehalt von aus der Getreidestärke konvertiertem Zucker auf und stellt damit ein naturbelassenes, hochwertiges Lebensmittel mit ausgezeichnetem Geschmack dar. Eine enzymatische Restaktivität ist im erfindungsgemäßen Lebensmittelerzeugnis unerwünscht. Es wird vielmehr ein neuartiges, naturbelassenes Getreidelebensmittel hergestellt.

Unter den Begriffen gelartig bis pastös soll insbesondere verstanden werden, dass das so erhaltene Lebensmittelerzeugnis tropffest ist, also nicht tropft, und dass das Lebensmittelerzeugnis streichfähig ist, insbesondere im Wesentlichen breiig-cremig ausgebildet ist. Das Lebensmittelerzeugnis ist bei Raumtemperatur, insbesondere zwischen 10°C und 35°C, streichfähig. Dadurch, dass das Lebensmittelerzeugnis nicht tropft, ist es beim Verzehr gut zu handhaben. Es eignet sich, da es tropffest ist, besonders als Brotaufstrich oder als Creme oder Überzug.

Dadurch, dass von ungekeimtem Getreide ausgegangen wird und nicht, wie im Stand der Technik, von gekeimtem Getreide (Malz), stehen ein unbearbeiteter oder wenigstens nahezu unbearbeiteter Rohstoff (Getreide) und ein unkomplizierter Verarbeitungsprozess zur Verfügung. Bei der Verwendung von ungekeimtem Getreide, das nicht müllereitechnisch aufgeschlossen ist, kann natürlicherweise ein geringer Keimanteil enthalten sein. Dieser kann im Getreiderohstoff verbleiben und braucht nicht vor der Extraktbildung entfernt werden.

Weiterhin entfällt auch die aufwändige Verarbeitung von Keimlingen aus gekeimtem Getreide, bei der üblicherweise tief in die ursprüngliche Zusammensetzung der Nährstoffkomponenten des Ausgangsmaterials eingegriffen wird. Dagegen wird erfindungsgemäß das volle Korn, d.h. die volle Getreidefrucht, verwendet mit seinen in sich stabilen Inhaltsstoffen. Das verwendete ungekeimte Ausgangsmaterial (Getreiderohstoff) weist eine völlig andere funktionelle Bedeutung als der Keimling des gekeimten Getreides auf und erfüllt zudem andere Ansprüche hinsichtlich Endprodukt, Inhaltsstoffen und Nährwert. Insbesondere ist die Nährwertzusammensetzung deutlich von der von Keimlingen verschieden. Es ist auch beim Getreiderohstoff, anders als bei Keimlingen, keine einschneidende Behandlung notwendig wie die Isolierung und das Reinigen des Keimlings, sowie eine Entbitterung des Produkts. Das Korn kann in beliebiger Form eingesetzt werden, als Ganzkorn, Schnitt, Flocke, Gries, Mehl, vorzugsweise sogar als Vollkornprodukt. Hervorzuheben sind die Zielsetzung, nämlich nicht eine Veredelung eines Nebenprodukts (Keimlinge), sondern die Herstellung eines neuartigen verzehrfertigen Lebensmittels, die einfache Anforderung an den Rohstoff, nämlich ein nicht oder nur gering vorbehandeltes Ausgangsmaterial sowie die Einfachheit des Verfahrens.

Der Extrakt aus dem Reaktionsprodukt aus einer oder auch mehreren Getreidearten wie Hafer, Gerste, Weizen, Roggen, Malz und dem Stärke zu Zucker konvertierenden Zusatz kann verwendet werden. Im Gegensatz zu bekannten Lebensmittelerzeugnissen, insbesondere herkömmlichen Aufstrichen, besteht das erfindungsgemäße Lebensmittelerzeugnis aus einer oder mehreren reinen, Natur belassenen Komponenten mit hoher physiologischer Wertigkeit und stellt ein unverfälschtes, gesundes und funktionelles Lebensmittel dar mit einem feinen bis herzhaften, charakteristischen Aroma. Weiterhin zeichnet sich das Lebensmittelerzeugnis aus durch einen hohen Nährwert und einen hohen Gehalt an getreideeigenen essentiellen Nährstoffen, wie Zuckerstoffe in Form von Maltosen und/oder Maltotriosen, die auch gegebenenfalls aus der getreideeigenen Stärke konvertiert werden können, pflanzliche Proteine und Fette, sowie Ballaststoffe, insbesondere Pentosane und Glucane, Mineralien, Spurenelemente und Vitamine.

Das Reaktionsprodukt ist ein Getreidesirup, der allerdings keineswegs ein handelsübliches Stärkehydrolisat darstellt, sondern bei dem es sich im Gegenteil um einen naturbelassenen Extrakt von wasserlöslichen Bestandteilen aus einer oder mehreren Getreidearten handelt mit löslichen, aus Stärke konvertierten Zuckerarten. Zur Herstellung des erfindungsgemäßen Lebensmittelerzeugnisses kann auch direkt von einem derartigen naturbelassenen Getreidesirup ausgegangen werden.

Im Vordergrund stehen die natürlichen und naturbelassenen hochwertigen Inhaltsstoffe, aber auch Geschmacks prägende Komponenten der zugrunde liegenden Getreidearten. Getreidefremde Zutaten, beispielsweise fermentativ gewonnene Enzyme, Zuckerarten, Geschmacks- und Aromastoffe oder stabilisierende Zusatzstoffe brauchen nicht zugesetzt werden. Es kann von einem Getreidesirup oder von einer Mischung aus gegebenenfalls vor zerkleinertem Getreide und einem Stärke zu Zucker konvertierenden Zusatz, insbesondere Getreidemalz, ausgegangen werden.

Weitere Merkmale und Vorteile der Erfindung sind den weiteren Ansprüchen sowie der Beschreibung zu entnehmen.

Vorteilhafterweise wird ein industriell hergestellter Getreidesirup verwendet. Alternativ kann zur Bildung des Extrakts das Getreide in Form von Korn, Komschnitt, auch Splits genannt, Flocken, Gries, Schrot, Mehl und/oder Getreidesirup eingesetzt werden. Es kann also, im Gegensatz zur Herstellung von Keimlingen, auch von "beschädigtem" Korn, also zerkleinertem Getreide, ausgegangen werden, das nicht mehr keimfähig ist. Allenfalls wird zum Konvertieren der getreideeigenen Stärke in Zucker ein Getreidemalz zugesetzt und ein Reaktionsprodukt gebildet. Neben dem bevorzugten Getreidemalz zur Konvertierung der Stärke in Zucker können jedoch auch geeignete Enzyme eingesetzt werden. Ebenso ist eine Mischung aus Getreidemalz und solchen Enzymen denkbar. Die Konvertierung der getreideeigenen, unlöslichen Stärke zu niedermolekularen, löslichen Zuckerstoffen wie Mono-, Di- oder Oligosaccharide ist vorteilhaft, um Viskositätseigenschaften und/oder das optische und geschmackliche Profil des Lebensmittelerzeugnisses zu verbessern. Eine schonende, natürliche und bevorzugte Art der Konvertierung ist die Stärkekonversion durch getreideeigene Enzyme, welche in Getreidemalz enthalten sind.

Vorzugsweise werden an Stärke zu Zucker konvertierendem Zusatz weniger als 50 Gew. % des Anteils an Getreide zugesetzt, insbesondere werden höchstens 30 Gew. % zugesetzt. Besonders bevorzugt werden höchstens 30 Gew. % Getreidemalz zugesetzt.

In einer vorteilhaften Weiterbildung wird dem Extrakt, insbesondere vor dem Auflconzentrieren, ein Lebensmittel und/oder ein verarbeiteter Lebensmittelrohstoft zugesetzt. So kann ein aromatisches Lebensmittel wie Fruchtmark und/oder Fruchtsaftkonzentrat oder dergleichen beigegeben werden. Verschiedene Geschmackskomponenten werden harmonisch verschmolzen. Es resultiert ein streichfähiges Lebensmittelerzeugnis mit schöner Textur und hohem physiologischen und geschmacklichen Anspruch.

Alternativ oder zusätzlich kann vor der Bildung des Extrakts ein Lebensmittel und/oder ein verarbeiteter Lebensmittelrohstoff dem Getreide bzw. der Mischung aus Getreide und dem Stärke konvertierenden Zusatz zugegeben werden. In diesem Fall wird auch aus dem Lebensmittel und/oder dem verarbeiteten Lebensmittelrohstoff ein wasserlöslicher Extrakt, der lösliche Bestandteile des Lebensmittels und/oder des verarbeiteten Lebensmittelrohstoffs zusammen mit dem Extrakt aus dem Reaktionsprodukt gebildet. Dabei werden die emährungsphysiologischen Vorteile von Getreide und Frucht synergetisch gekoppelt und die verschiedenen Geschmackskomponenten harmonisch verschmolzen.

Es kann auch direkt von einem Getreidesirup ausgegangen werden, wie er als Rohstoff in der Lebensmittelindustrie, beispielsweise für die Herstellung von Backwaren, industriell eingesetzt wird. Der Getreidesirup ist ein wässriger Extrakt aus dem Reaktionsprodukt aus mit Getreidemalz vermischtem, ungekeimtem Getreide. Es kann jedoch zur Herstellung des erfindungsgemäßen Lebensmittelerzeugnisses bzw. des Extrakts als dessen Vorstufe, das Reaktionsprodukt der Getreiderohstoffe und dem Stärke in Zucker konvertierenden Zusatz, insbesondere Getreidemalz, bei erhöhter Temperatur und/oder erhöhtem Druck gewonnen werden. So kann ein Lebensmittelerzeugnis, insbesondere ein Aufstrich, erzeugt werden, der mikrobiologisch stabil und ohne Zusatz von Konservierungsmitteln über mehrere Monate haltbar ist und dem Endverbraucher als verzehrfähiges Lebensmittelerzeugnis zugänglich gemacht werden kann. Vorzugsweise ist das Lebensmittelerzeugnis in haushaltsüblichen Gebinden verfügbar.

Günstigerweise wird die Textur durch Wasserentzug und/oder Zusatz von wenigstens einem Textur gebenden Mittel erzeugt. Wird die gelartige bis pastöse Textur nur durch Wasserentzug erzeugt, beträgt der Trockensubstanzgehalt des Lebensmittelerzeugnisses vorzugsweise mindestens 60 Gew. %. vorzugsweise mindestens 65 Gew. %, besonders bevorzugt 65 Gew. % bis 75 Gew. %. Andererseits haben Ballaststoffkonzentrate aus Getreide, Früchten oder Gemüse Textur gebende und Wasser bindende Eigenschaften. Vorteilhaft ist, dass selbst beim Stehenlassen und nach dem Durchrühren es nicht zu einer Absonderung von Serum kommt. Eine gelartige bis pastöse Textur, also eine gebundene Endkonsistenz, kann mit solchen Zusätzen bereits bei geringeren Trockensubstanzgehalten erreicht werden. Ein weiterer Vorteil ist die zusätzliche Erhöhung der physiologischen Wertigkeit durch den erhöhten Ballaststoffgehalt bei Zugabe von Ballaststoffen. Der Gehalt an Trockensubstanz bzw. die Menge an zuzusetzendem, Textur gebenden Zusatz kann je nach Bedarf und Geschmack eingestellt werden.

Vorzugsweise wird bei der Herstellung des Lebensmittelserzeugnisses Wasser durch Eindicken des Extrakts bei erhöhter Temperatur und/oder durch Unterdruck und/oder durch Filtration entzogen. Insbesondere wird die Filtration als Ultrafiltration, Mikrofiltration oder Umkehrosmose durchgeführt. Filtration bedeutet einerseits eine Trennung von flüssigen und festen Stoffen. Andererseits können bei der Filtration mit einer Membran auf Grund verschiedener Druckverhältnisse gelöste oder kolloidal gelöste Partikel mit einem definiert hohen Molekulargewicht auf der Membrane zurückgehalten und abgetrennt werden. Je nach Molekülgröße der abgetrennten Partikel bzw. der Feinmaschigkeit der eingesetzten Membran spricht man von Ultrafiltration, Mikrofiltration bis hin zur Umkehrosmose.

Erfolgt der Wasserentzug aus dem Extrakt bei niedriger Temperatur, wie dies beispielsweise bei Unterdruck, Ultrafiltration oder Umkehrosmose geschieht, wird zweckmäßigerweise eine Restaktivität der zugesetzten Enzyme oder des zugesetzten Malz inaktiviert. Dies geschieht vorzugsweise durch Erhitzen des Reaktionsprodukts, des Extrakts und/oder des Lebensmittelerzeugnisses in einem beliebigen Arbeitsschritt auf eine Temperatur von mindestens 85°C über mehrere Minuten. Damit kann eine Veränderung der Zusammensetzung, der Struktur und des Geschmacks über die Lagerzeit des Lebensmittelerzeugnisses vermieden werden.

Bevorzugt beträgt der Getreidemalzantell weniger als 50 Gew. % bezogen auf den Anteil von ungekeimtem Getreide.

Es können Anteile eines weiteren Lebensmittels und/oder eines verarbeiteten Lebensmittelrohstoffs zugesetzt sein. Bevorzugt wird wenigstens eines aus der Gruppe Fruchtsaft. Fruchtmark, Gemüsesaft, Gemüsemark, Fruchtsaftkonzentrat, Gemüsesaftkonzentrat zugesetzt, wobei der Anteil des weiteren Lebensmittels und/oder verarbeiteten Lebensmittelrohstoffs höchstens 75 Gew.% des gesamten Lebensmittelerzeugnisses beträgt.

Ebenso können Aromen, insbesondere natürliche Aromen wie Nussaroma und/oder Vanillearoma, zugesetzt sein. In dem so hergestellten Lebensmittelerzeugnis, insbesondere Aufstrich, wird das zugesetzte Geschmacksprofil durch die Getreidezubereitung getragen und gestützt. Im Gegensatz zu sonstigen bekannten Nussaufstrichert sind hier die natürlichen und emährungsphysiologischen Faktoren nicht durch Zusatz von Zucker, Fett und anderen Zutaten mit geringer Wertigkeit beeinträchtigt.

Ferner kann wenigstens ein Textur gebendes Mittel zugesetzt sein, beispielsweise ein oder mehrere Gelier- oder Dickungsmittel. Vorzugsweise ist das Textur gebende Mittel ein Ballaststoffkonzentrat aus Fruchtfaser und/oder Getreidefaser.

Ist zusätzlich wenigstens ein Lebensmittelrohstoff und/oder eine Lebensmittelzubereitung in eingemischter und/oder abgegrenzter Form zugesetzt, können Lebensmittelerzeugnisse mit großer Geschmacksvielfalt dargestellt werden, die unterschiedliche Geschmackskomponenten harmonisch verbinden. So können Früchte, auch Dauerfrüchte wie Sultaninen, Nüsse, Schokolade, auch mit Glasuren oder Fettmassen überzogen, wie auch konfitürenähnliche Fruchtzubereitungen wie Gelees, Nussmassen und dergleichen, ebenso gebackene oder extrudierte Lebensmittel wie Brösel, Cookies, Crisps, oder auch puddingartige Zubereitungen, Fettcremes, Schokocremes, sowie Milch- und Molkenprodukte oder Zubereitungen daraus, wie beispielsweise Sahne, Joghurt, Quark, Käse und dergleichen, oder auch zucker- oder fettbasierte Schäume, Fruchtschäume und dergleichen und/oder süße oder würzige Soßen, Sirupe, Pasten und dergleichen zugesetzt werden.

Es ist auch möglich, dass wenigstens ein die Haltbarkeit verbessernder Zusatz zugesetzt ist und/oder dass wenigstens ein Zusatz zur Regulierung, Änderung und/oder Stabilisierung des pH-Werts zugesetzt ist. Damit können Geschmack, Lagerfähigkeit bzw. funktionelle Eigertschaften des Lebensmittelerzeugnisses bedarfsgerecht eingestellt werden.

Weitere Vorteile ergeben sich aus der folgenden Beschreibung, in der Ausführungsbeispiele der Erfindung dargestellt sind. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung der Ausführungsbeispiele

Als Ausgangsstoff für das erfindungsgemäßen Lebensmittelerzeugnis kann neben Getreidesirup, der bereits einen wässrigen Extrakt aus einem Reaktionsprodukt von Getreide und beispielsweise Getreidemalz darstellt, der zu dem Lebensmittelerzeugnis, insbesondere Aufstrich, aufkonzentriert werden kann, auch Getreide und/oder Getreideerzeugnisse als Basisrohstoff verwendet werden, aus denen ein wässriger Extrakt gewonnen und zu einer gelartigen bis pastösen Textur aufkonzentriert wird. Dabei kann von Getreideprodukten in Form von ganzen Körnern und/oder in einem zerkleinerten und/oder gemahlenen Zustand ausgegangen werden, wobei diese auch vorbehandelt, beispielsweise durch Dämpfen stabilisiert oder auch müllereitechnisch aufgeschlossen sein können.

Alle physiologisch relevanten Inhaltsstoffe der als Ausgangsrohstoff eingesetzten Getreidearten und/oder Getreideerzeugnisse bleiben während der weiteren Verarbeitung weitgehend in ihrer natürlichen Zusammensetzung erhalten. Solche Inhaltsstoffe sind insbesondere getreideeigene Zuckerstoffe, gegebenenfalls nach Konvertierung der im Getreiderohstoff enthaltenen Stärke, getreideeigene essentielle Proteine und Fette, getreideeigene Ballaststoffe, insbesondere Pentosane und Glucane, wie etwa β-Glucan, getreideeigene Mineraistoffe, Spurenelemente und Vitamine.

In der Regel wird die in den Getreidearten vorhandene Stärke durch das Herstellungsverfahren oder technologisch gesteuert teilweise zu niedermolekularen Zuckerstoffen konvertiert. Eine wenigstens teilweise Konvertierung der natürlicherweise enthaltenen Stärke ist erwünscht und zur Erzielung von gewünschten Viskositätseigenschaften oder um das optische und/oder geschmackliche Profil des Erzeugnisses zu verbessern, auch vorteilhaft. Für den Stärkeabbau sind unterschiedliche Verfahren bekannt: physikalisch durch Temperatur und Druck, chemisch durch saure oder alkalische Behandlung, enzymatisch durch aus Mikroorganismen fermentativ gewonnene Amylasen. Bevorzugt ist die Stärkekonversion durch getreideeigene Enzyme, welche beim Mälzen von Getreide im Keimling angereichert werden. Ein solches Malz kann dem Getreiderohstoff zugesetzt werden.

Für das erfindungsgemäße Lebensmittelerzeugnis wird die Stärkekonversion durch Getreidemalz bevorzugt. Dabei wird das Getreidemalz dem Getreiderohstoff vor der Extraktion des Reaktionsprodukts beigemischt.

Im Folgenden werden mehrere bevorzugte Zubereitungen des Lebensmittelerzeugnisses erläutert.

### Beispiel 1

Rohstoffe:
80 kg Getreidekorn, geschrotet oder vermahlen, aus Hafer
20 kg Getreidemalz, geschrotet oder vermahlen, aus Gerstenmalz

Die Rohstoffe werden gemischt, mit Wasser versetzt und über einen längeren Zeitraum bei höherer Temperatur gegebenenfalls unter langsamem Rühren gehalten. Dabei wird die enthaltene getreideeigene Stärke durch das Getreidemalz in niedermolekulare Zucker abgebaut. Die wasserlöslichen Getreideinhaltsstoffe werden in die flüssige Phase übergeführt und das Reaktionsprodukt aus Getreiderohstoff und Getreidemalz gebildet.

Die so gebildete "Maische" wird, ähnlich wie die Würzherstellung beim Brauverfahren, über die ungelösten Festbestandteile abgelassen und/oder filtriert. Gegebenenfalls können nachgeflockte Stärke und andere Trübungen anschließend abfiltriert werden. Der Extrakt, d.h. die erhaltene, so genannte "Würze" wird nun schonend in einem Vakuumevaporator auf einen Trockensubstanzgehalt von etwa 75% aufkonzentriert. Am Ende des Konzentrierungsvorgangs wird das Lebensmittelerzeugnis kurzzeitig auf eine höhere Temperatur erhitzt, die ausreichend ist, noch vorhandene Enzymaktivitäten zu inaktivieren.

Das so hergestellte Lebensmittelerzeugnis hat im heißen Zustand eine sämige, honigartige Konsistenz und nach dem Abkühlen eine gelartige bis pastöse Konsistenz bzw. Textur. Es enthält die wasserlöslichen Inhaltsstoffe der verwendeten Rohstoffe Hafer und Gerstenmalz sowie den aus der Stärke des Hafers durch das Gerstenmalz konvertierten Zucker und hat das typische Geschmacksprofil der zugrunde liegenden Getreidearten. Es eignet sich hervorragend zum direkten Verzehr als Lebensmittelerzeugnis, insbesondere als Aufstrich, oder als Beilage zu anderen Gerichten, aber auch als tragende oder variierende Komponente in Mischung mit anderen Lebensmitteln, beispielsweise Joghurt, Desserts, Pudding, Soßen, Eiscreme, wie auch zum Süßen oder zur physiologischen und geschmacklichen Aufbesserung von Nahrung, auch von Kleinkindnahrung, und mit heißen oder kalten Getränken.

### Beispiel 2

Rohstoffe:
40 kg Getreidekorn, geschrotet oder vermahlen,
10 kg Getreidemalz, geschrotet oder vermahlen,
50 kg Fruchtmark, beispielsweise Cranberries

Der Extrakt wird wie in Beispiel 1 gebildet, jedoch mit der Abänderung, dass die Rohstoffe zuvor zusätzlich mit einem aromatischen Lebensmittel vermischt werden. Bei dem auf diese Weise hergestellten Lebensmittelerzeugnis werden die emährungsphysiologischen Vorteile von Getreide und Frucht synergistisch gekoppelt und die verschiedenen Geschmackskomponenten harmonisch verschmolzen.

### Beispiel 3

Rohstoffe:
70 kg Getreidekorn, geschrotet oder vermahlen,
15 kg Getreidemalz, geschrotet oder vermahlen,
15 kg Apfelsaftkonzentrat

In Abänderung zu Beispiel 2 wird das zusätzliche aromatische Lebensmittel, in diesem Fall Apfelsaftkonzentrat, unmittelbar vor dem Aufkonzentrieren des Reaktionsprodukts eingemischt. Auch hier resultiert ein streichfähiges Lebensmittelerzeugnis, insbesondere Aufstrich, mit einer schönen Textur und hohem physiologischen und geschmacklichen Anspruch. Die Zumischung einer weiteren Lebensmittelskomponente ist prinzipiell auch nach dem vorausgehenden Aufkonzentrieren des Getreideextrakts möglich.

### Beispiel 4

Rohstoffe:
80 kg Getreidekorn, geschrotet oder vermahlen, aus Hafer
20 kg Getreidemalz, geschrotet oder vermahlen, aus Gerstenmalz
Variante a: Vanillearoma
Variante b: Haselnussaroma

Dem in Beispiel 1 erhaltenen gelartigen bis pastösen Lebensmittelerzeugnis werden vor dem Abfüllen handelsübliche, vorzugsweise natürliche Aromen homogen untergemischt. In den so hergestellten Lebensmittelerzeugnissen wird das zugesetzte Geschmacksprofil durch die Getreidezubereitung getragen und unterstützt. Geschmacklich ähnelt die mit Hasehussaroma unterlegte Getreidezubereitung beispielsweise hochwertigen Nusscremes, die konventionell mit Fett und Zucker sowie anderen Zutaten hergestellt sind.

### Beispiel 5

Rohstoffe:
80 kg Getreidekorn, geschrotet oder vermahlen, aus Hafer
20 kg Getreidemalz, geschrotet oder vermahlen, aus Gerstenmalz
3 Gew. % Haferballaststoff (bezogen auf die Menge erhaltenen Lebensmittelerzeugnisses)

Es wird wie in Beispiel 1 vorgegangen, jedoch mit der Abwandlung, dass zu den Rohstoffen vor dem Aufkonzentrieren des aus dem Reaktionsprodukt gewonnenen Extrakts ein Anteil an handelsüblichem Ballaststoffkonzentrat wie Fruchtfaser und/oder Getreidefaser zugesetzt wird. In diesem Fall werden 3 Gew. % Haferballaststoff mit einem Ballaststoffgehalt von 95 Gew. % zugesetzt, bezogen auf die Menge des erhaltenen Lebensmittelerzeugnisses. Durch den Zusatz von Ballaststoffen wird die gewünschte gebundene Endkonsistenz von gelartiger bis pastöser Textur bereits mit einem niedrigeren Trockensubstanzgehalt erreicht, in diesem Beispiel mit 65 Gew. % Trockensubstanzgehalt. Der erhöhte Ballaststoffgehalt erhöht die physiologische Wertigkeit. Außerdem zeigt das Lebensmittelerzeugnis keine Absonderung von Serum beim Stehenlassen und nach dem Durchrühren.

### Beispiel 6

30 g Lebensmittelerzeugnis gemäß einem der Beispiele 1 bis 5 wird in 150 g handelsüblichen gekühlten weißen Joghurt eingerührt. Das Ergebnis ist ein wohlschmeckendes und Natur belassenes Dessert.

### Beispiel 7

Ein handelsübliches Puddingpulver wird gemäß Anleitung angerührt. Vor dem Erhitzen wird eine beliebige Menge Lebensmittelerzeugnis gemäß den Beispielen 1 bis 5 möglichst gleichmäßig eingerührt und die Masse fertig zubereitet. Das Lebensmittelerzeugnis lässt sich vollkommen homogen in der Puddingmasse verteilen und flockt auch beim Kochen oder Abkühlen nicht aus. Das dem Lebensmittelerzeugnis eigene Geschmacksprofil verträgt sich gut mit praktisch allen geprüften Pudding- oder Dessertvarianten.

### Beispiel 8

Eine beliebige Menge Lebensmittelerzeugnis gemäß Beispiel 1 bis 5 wird vor, während und/oder direkt nach der Zubereitung von Soßen, Marinaden oder Getränken eingerührt und homogen verteilt. Es flockt selbst in würzigen oder sauren Produkten nicht aus und rundet den Geschmack des fertigen Lebensmittels harmonisch ab.

### Beispiel 9

150 g eines trockenen Eismix werden in 500 ml Milch eingerührt. Der kalten Mischung werden 100 g Lebensmittelerzeugnis gemäß den Beispielen 1 bis 5 untergezogen und gemäß Anleitung aufgekocht bzw. fertig zubereitet. Nach dem etwaigen Abkühlen wird in einer Eismaschine bis zur Gefrierung kaltgerührt. Das so hergestellte Speiseeis hat eine cremig-glatte Struktur, eine angenehme Süße und ein elegantes Geschmacksprofil. Auch bei der Herstellung von Fruchteissorten ist die Verträglichkeit der Komponenten einwandfrei.

### Beispiel 10

Eine beliebige Menge Lebensmittelerzeugnis gemäß einem der Beispiele 1 bis 5 wird mit handelsüblichem Honig gleichmäßig vermischt. Es resultiert ein wohlschmeckender Aufstrich, bei dem die aromatische Süße des Honigs eine herzhafte Aufwertung erfährt.

### Beispiel 11

Zu aufgeschmolzener Schokolade wird eine beliebige Menge Lebensmittelerzeugnis gemäß einem der Beispiele 1 bis 5 zugesetzt und bei höherer Temperatur glatt gerührt. Die Masse wird in flache Formen gegossen und abgekühlt. Das Ergebnis ist eine je nach Mischungsverhältnis pastöse bis feste Masse mit einer intensiven Geschmacksnote.

Die Verwendung eines Lebensmittelerzeugnisses gemäß einem der Beispiele 1 bis 11 als gesunde und physiologisch wertvolle Alternative zu Konfitüren oder anderen Aufstrichen eröffnet in vielen Anwendungen in Haushalt, in der Gastronomie und beim Catering eine vielseitige geschmackliche Bereicherung, zum Beispiel als Beilage, Aufstrich oder Füllung für Pfannkuchen, Omelette, Biskuitrollen, Berliner und dergleichen.

## Patentansprüche

1. Verfahren zur Herstellung eines verzehrfertigen getreidebasierten Lebensmittelerzeugnisses, insbesondere Aufstrichs, **dadurch gekennzeichnet, dass** ein wässriger Extrakt aus einem Reaktionsprodukt aus ungekeimtem Getreide und einem Stärke in Zucker konvertierenden Zusatz in eine bei Raumtemperatur gelartige bis pastöse Textur überführt wird.

2. Verfahren nach Anspruch 1, **dadurch gekennzeichnet, dass** zur Bildung des Reaktionsprodukts das Getreide in Form von Korn, Komschnitt, Flocken, Gries, Schrot und/oder Mehl beigegeben wird.

3. Verfahren nach Anspruch 1 oder 2, **dadurch gekennzeichnet, dass** die Stärke durch ein Getreidemalz konvertiert wird.

4. Verfahren nach einem der vorhergehenden Ansprüche, **dadurch gekennzeichnet, dass** als Stärke in Zucker konvertierender Zusatz ein Enzym eingesetzt wird.

5. Verfahren nach einem der vorhergehenden Ansprüche, **dadurch gekennzeichnet, dass** an Stärke in Zucker konvertierendem Zusatz weniger als 50 Gew.% des Anteils an Getreide zugesetzt wird.

6. Verfahren nach einem der vorhergehenden Ansprüche, **dadurch gekennzeichnet, dass** dem Extrakt vor dem Aufkonzentrieren ein Lebensmittel und/oder ein verarbeiteter Lebensmittelrohstoff zugesetzt wird.

7. Verfahren nach einem der vorhergehenden Ansprüche, **dadurch gekennzeichnet, dass** den Rohstoffen vor der Bildung des Reaktionsprodukts ein Lebensmittel und/oder ein verarbeiteter Lebensmittelrohstoff zugesetzt wird.

8. Verfahren nach einem der vorhergehenden Ansprüche, **dadurch gekennzeichnet, dass** die Bildung des Reaktionsprodukts bei erhöhter Temperatur und/oder erhöhtem Druck durchgeführt wird.

9. Verfahren nach einem der vorhergehenden Ansprüche, **dadurch gekennzeichnet, dass** die Textur durch Wasserentzug und/oder Zusatz von wenigstens einem Textur gebenden Mittel erzeugt wird.

10. Verfahren nach Anspruch 9, **dadurch gekennzeichnet, dass** dem Extrakt Wasser durch Eindicken bei erhöhter Temperatur und/oder Unterdruck und/oder Filtration entzogen wird.

11. Verfahren nach einem der vorhergehenden Ansprüche, **dadurch gekennzeichnet, dass** eine im Reaktionsprodukt oder im Extrakt vorhandene enzymatische Restaktivität inaktiviert wird.

12. Verfahren nach Anspruch 11, **dadurch gekennzeichnet, dass** die enzymatische Restaktivität in einem beliebigen Arbeitsschritt nach der Stärkekonvertierung durch Erhitzen auf mindestens 85°C inaktiviert wird.

13. Verzehrfertiges getreidebasiertes Lebensmittelerzeugnis, insbesondere Aufstrich, **gekennzeichnet durch** eine bei Raumtemperatur gelartige bis pastöse Textur und einen überwiegenden Gewichtsanteil an wasserlöslichen Bestandteilen eines Reaktionsprodukts von ungekeimtem Getreide und einem Stärke in Zucker konvertierenden Mittel.

14. Lebensmittelerzeugnis nach Anspruch 13, **dadurch gekennzeichnet, dass** das Stärke in Zucker konvertierende Mittel durch Getreidemalz gebildet ist.

15. Lebensmittelerzeugnis nach Anspruch 13 oder 14, **dadurch gekennzeichnet, dass** der Getreidemalzanteil vor der Bildung des Reaktionsprodukts weniger als 50 Gew.% bezogen auf den Anteil von ungekeimtem Getreide beträgt.

16. Lebensmittelerzeugnis nach einem der Ansprüche 13 bis 15, **dadurch gekennzeichnet, dass** Anteile eines weiteren Lebensmittels und/oder eines verarbeiteten Lebensmittelrohstoffs zugesetzt sind.

17. Lebensmittelerzeugnis nach Anspruch 16, **dadurch gekennzeichnet, dass** wenigstens eines aus der Gruppe Fruchtsaft, Fruchtmark, Gemusesaft. Gemüsemark, Fruchtsaftkonzentrat, Gemüsesaftkonzentrat, zugesetzt ist.

18. Lebensmittelerzeugnis nach einem der Ansprüche 13 bis 17, **dadurch gekennzeichnet, dass** wenigstens ein Textur gebendes Mittel zugesetzt ist.

19. Lebensmittelerzeugnis nach einem der Ansprüche 13 bis 18, **dadurch gekennzeichnet, dass** zusätzlich wenigstens ein Lebensmittelrohstoff und/oder eine Lebensmittelzubereitung in eingemischter und/oder abgegrenzter Form zugesetzt ist.

20. Lebensmittelerzeugnis nach einem der Ansprüche 13 bis 19, **dadurch gekennzeichnet, dass** wenigstens ein die Haltbarkeit verbessemder Zusatz zugesetzt ist.

21. Lebensmittelerzeugnis nach einem der Ansprüche 13 bis 20, **dadurch gekennzeichnet, dass** wenigstens ein Zusatz zur Regulierung, Änderung und/oder Stabilisierung des pH-Werts zugesetzt ist.
